(19) Europäisches Patentamt
European Patent Office
Office européen des brevets

(11) Veröffentlichungsnummer: **0 335 183**
**A2**

(12) # EUROPÄISCHE PATENTANMELDUNG

(21) Anmeldenummer: **89104663.3**

(22) Anmeldetag: **16.03.89**

(51) Int. Cl.[4]: **C08G 18/32 , C08G 18/38 , C08L 25/18 , C08L 75/06 , C09J 3/14**

(30) Priorität: **29.03.88 DE 3810567**

(43) Veröffentlichungstag der Anmeldung:
**04.10.89 Patentblatt 89/40**

(84) Benannte Vertragsstaaten:
**DE ES FR GB IT**

(71) Anmelder: **BAYER AG**

**D-5090 Leverkusen 1 Bayerwerk(DE)**

(72) Erfinder: **Beck, Manfred, Dr.**
**Weberstrasse 11a**
**D-5272 Wipperfürth(DE)**
Erfinder: **Müller-Albrecht, Horst, Dr.**
**Roggendorfstrasse 59**
**D-5000 Koeln 80(DE)**
Erfinder: **Königshofen, Heinrich, Dr.**
**Am Mühlenberg 26**
**D-5060 Bergisch Gladbach 2(DE)**

(54) **Polyurethanmischungen und ihre Verwendung als Klebstoffe.**

(57) Mischungen, die neben einem Polyurethan ein Phenol und/oder ein Säureamid sowie ein modifiziertes Polystyrol und/oder ein modifiziertes Vinylaromat/Dienpolymer und gegebenenfalls ein Polyisocyanat und/oder ein Vinylaromat/Dien-Blockpolymer oder Polystyrol aufweisen, zeigen als Klebstoffe eine verbesserte Haftung an thermoplastischen Kautschuken auf Basis Styrol/Butadien und eine verlängerte Kontaktklebzeit nach Wärmeaktivierung.

EP 0 335 183 A2

# Polyurethanmischungen und ihre Verwendung als Klebstoffe

Die Erfindung betrifft Polyurethanmischungen und ihre Verwendung als Klebstoffe.

Polyurethane auf Basis von Polyestern als Polyolkomponente werden für viele Anwendungszwecke in Form ihrer Lösungen als Klebstoffe eingesetzt. Je nach Einsatzzweck werden spezielle Typen benötigt, z.B. rasch kristallisierende Typen, die i.a. den Nachteil einer kurzen Kontaktklebzeit nach der Wärmeaktivierung haben. Es ist ferner aus DE-A-3 502 379 bekannt, Polyurethane in Abmischung mit Polyisocyanaten als Klebstoffe zu verwenden.

Die Verklebung von Gummisohlen mit Polyurethanklebstoffen liefert in vielen Fällen ohne spezielle Vorbehandlung keine zufriedenstellenden Haftwerte. Daher sind zahlreiche Vorschläge zur Verbesserung der Haftung gemacht worden. So wurde in der GB-PS 1 500 296 vorgeschlagen, die Lauffläche von Sohlen vor dem Klebstoffauftrag mit Lösungen von N-Halogenverbindungen einzustreichen (sog. Primern). Derart vorbehandelte Sohlen liefern bei Verwendung von Polyurethanklebstoffen gute Haftwerte. Von Nachteil ist, daß ein zusätzlicher Arbeitsgang vor der Verklebung erforderlich ist. Es ist ferner bekannt, N-Halogenverbindungen mit dem Klebstoff zur Reaktion zu bringen bzw. Gemische davon als Primer zu verwenden (GB-PS 1 293 842). Auch hier gelten die obengenannten Nachteile. Ein anderer Primer wird in GB-PS 2 048 897 beschrieben, der ein Reaktionsprodukt aus einer N-Halogenverbindung und einem Styrol/Butadien/Styrol Blockpolymer (SBS) darstellt. Primer gemäß GB-PS 2 048 897 enthalten noch N-Halogenverbindungen, ferner bleibt die Notwendigkeit eines zusätzlichen Arbeitsganges. Eine verlängerte Kontaktklebezeit nach Wärmeaktivierung ist wünschenswert.

Aus GB-PS 1 244 964 ist bekannt, die Lagerbeständigkeit von Polyurethanlösungen, die Isocyanate enthalten, durch Zusatz von p-Nitrophenol zu erhöhen. Eine Verbesserung der Kontaktklebrigkeit wird nicht erwähnt.

Aufgabe der Erfindung war es daher, Mischungen zur Verfügung zu stellen, die geeignet sind, Gummisohlen auf Basis von thermoplastischen Styrol/Butadien-Kautschuken zu verkleben und die darüber hinaus eine verbesserte Kontaktklebrigkeit nach Wärmeaktivierung aufweisen.

Gegenstand der Erfindung sind Mischungen, vorzugsweise als Klebstoff geeignete Mischungen, enthaltend

A) ein Polyurethan A
B) ein Phenol B1 und/oder ein Säureamid B2
C) ein modifiziertes Polystyrol C1 und/oder ein modifiziertes Vinylaromatdiencopolymer C2

und gegebenenfalls

D) ein Polystyrol D1 und/oder ein Vinylaromat/Diencopolymer D2

und gegebenenfalls

E) ein Polyisocyanat E.

In einer bevorzugten Ausführungsform sind enthalten
20 bis 99 Gew.-Teile des Polyurethans A,
0,5 bis 40 Gew.-Teile des Phenols B1 oder des Säureamids B2,
0,5 bis 80 Gew.-Teile wenigstens eines modifizierten Polymeren C
0 bis 50 Gew.-Teile eines Polymeren D
und gegebenenfalls
0 bis 10 Gew.-Teile eines Polyisocyanates E
gegebenenfalls gelöst in einem Lösungsmittel, wobei in der Mischung maximal 50 Gew.-Teile weiterer Substanzen enthalten sind.

In einer bevorzugten Ausführungsform werden 100 Gew.-Teile der Mischung gelöst in 150 bis 5000 Gew.-Teilen eines Lösungsmittels.

Gegenstand der Erfindung ist weiterhin ein Verfahren zum Verkleben von Substraten, dadurch gekennzeichnet, daß als Klebstoff eine erfindungsgemäße Mischung gemäß wenigstens einem der vorhergehenden Ansprüche verwendet wird.

Bei der erfindungsgemäß geeigneten Komponente (A) handelt es sich vorzugsweise um weitgehend lineare, endständige Hydroxylgruppen aufweisende, lösliche oder schmelzbare Polyurethane. Die Anwendung dieser Werkstoffe zum Verkleben verschiedener Substrate ist bekannt. Ihre Herstellung ist beispielsweise in der DE-PS 1 256 822, 1 930 336 oder 2 161 340 beschrieben.

Es handelt sich vorzugsweise um auf Basis kristalliner Dihydroxypolyester vom Molekulargewicht 800-8000 unter Verwendung von Kettenverlängerungsmitteln und Diisocyanaten aufgebaute Polyurethane. Gleichermaßen verwend bar sind Polyesterpolyurethane, in denen die Polyesterkomponente aus einer

Mischung verschiedener Alkohole hergestellt wurde (DE-A-3 502 379). Solche Polyurethane haben ein günstiges Wärmeaktivierungsverhalten.

Möglich ist auch die Anwendung von Polyether- oder Polyetheresterdiole enthaltenden Reaktionsprodukten mit Polyisocyanaten. Auch analoge Polyurethane, deren Polyesterkomponente ein Polycarbonat ist, oder in denen Polycarbonatgruppen neben Carbonsäureestergruppen vorliegen, sind möglich. Ferner können auch Polyester-Polyurethane verwendet werden, in denen die Säurekomponente eine Mischung aus verschiedenen Carbonsäuren ist. Außer Polyestern auf Basis von C4-Diolen lassen sich auch solche einsetzen, die aus C2- und/oder C3-Diolen bzw. Gemischen daraus mit C4-Diolen hergestellt wurden. Bevorzugt sind die Verfahrensprodukte nach den DE-PS 1 256 822, 1 930 336 und 2 161 340 sowie nach der DE-A-3 502 379.

Die Komponente B ist vorzugsweise farblos oder nur schwach gefärbt, so daß die Farbe bei verklebten Produkten nicht merklich in Erscheinung tritt. Komponente B kann entweder ein Phenol B1 und/oder ein Amid B2 sein. Die Phenole können ein- oder mehrwertig sein. Vorzugsweise haben die Phenole B1 einen $pK_A$-Wert von >7.4.

Bevorzugte Phenole B1 entsprechen der folgenden Formel (I)

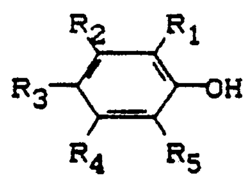

(I)

worin bedeuten:

$R_1$-$R_5$ Wasserstoff, $C_1$-$C_{20}$-Alkyl, $C_5$-$C_8$-Cycloalkyl, substituiertes Cycloalkyl, Alkylarylen vorzugsweise mit Alkyl = $C_1$-$C_{18}$ und Arylen = $C_6H_4$,

wobei im Alkyl- oder Alkylarylensubstituenten die Alkylgruppen durch -COO-Gruppen oder -O-unterbrochen sein können.

Besonders bevorzugte Phenole entsprechend Formel (I) sind Nonylphenol, 4-tert.-Butylphenol, Phenylphenole, 1,2-, 1,3-, 1,4-Dihydroxybenzol sowie deren kernalkylierte Verbindungen.

In einer anderen bevorzugten Ausführungsform handelt es sich bei den Phenolen B1 um mehrkernige Diphenole, beispielsweise

Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-sulfoxide,
Bis-(hydroxyphenyl)-sulfone und
$\alpha,\omega$-Bis-(hydroxyphenyl)-diisopropylbenzole,

sowie deren kernalkylierte und kernhalogenierte Verbindungen. Diese und weitere geeignete aromatische Dihydroxyverbindungen sind z.B. in den US-Patentschriften 32 71 367 und 29 99 846 und in den deutschen Offenlegungsschriften 20 63 050 und 22 11 957 aufgeführt.

Erfindungsgemäß einsetzbare Diphenole B1 sind insbesondere solche der Formel (II)

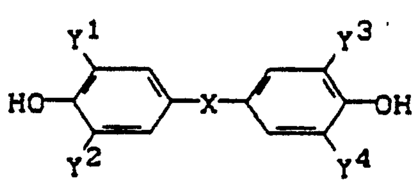

(II)

worin

X eine Einfachbindung oder ein Brückenglied bedeutet, insbesondere $-CH_2-$,

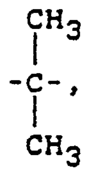, 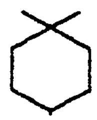, O, S, $SO_2$, $CO_2$, CO oder 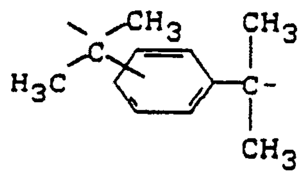,

$Y^1$-$Y^4$ gleich oder verschieden sind und Wasserstoff, $C_1$-$C_4$-Alkyl, vorzugsweise Methyl, oder Halogen, vorzugsweise Chlor oder Brom bedeuten.

Weitere bevorzugte Diphenole sind beispielsweise
2,2-Bis-(4-hydroxyphenyl)-propan,
1,1-Bis-(4-hydroxyphenyl)-cyclohexan,
2,2-Bis-(3,5-dichlor-4-hydroxyphenyl)-propan,
2,2-Bis-(3,5-dibrom-4-hydroxyphenyl)-propan,
2,2-Bis-(3,5-dimethyl-4-hydroxyphenyl)-propan,
Bis-(3,5-dimethyl-4-hydroxyphenyl)-methan und
Bis-(4-hydroxyphenyl)-sulfid.

Phenole mit mehr als einer phenolischen OH-Gruppe können in einer speziellen Ausführungsform an einer phenolischen OH-Gruppe verestert sein. Bevorzugt sind die mit mehrbasischen Säuren, insbesondere mit Carbonsäuren oder Phosphorsäuren halbseitig veresterten Bisphenole der allgemeinen Formel (II), z.B. der Kohlensäureester des Bisphenol A und daraus herstellbare Oligomere mit endständigen phenolischen Gruppen und der Phosphorsäureester des Bisphenol A. Geeignet sind ferner oligomere Ester aus Bisphenolen und Dicarbonsäuren z.B. aus Terephthal- und/oder Isophthalsäure, die endständig noch mindestens eine phenolische Gruppe tragen.

Amide B2 sind vorzugsweise aliphatische und aromatische Carbonsäureamide, die am Stickstoff noch substituiert sein können, z.B. Benzamid, N-Methylbenzamid, Dimethylbenzamid, Stearylamid. Weitere Beispiele sind Sulfonsäureamide, besonders bevorzugt aromatische Sulfonsäureamide wie p-Toluolsulfonsäureamide, N,N-Diethyl-toluolsulfonsäureamide, N-Methyl-benzolsulfonsäureamid oder N,N-Dimethyl-benzolsulfonsäureamid. Ferner beispielsweise Octadecylsulfonsäurediethylamid.

Bei den Polymeren C handelt es sich um modifizierte Polymere. Unter modifizierten Polymeren wird im Rahmen der vorliegenden Erfindung verstanden, daß die Polymeren halogeniert, insbesondere bromiert und vor allem chloriert oder daß sie gepfropft sind.

Bevorzugte modifizierte Polymere C1 und C2 lassen sich durch entsprechende Modifizierung der weiter unten angegebenen Polymere D1 und D2 erhalten.

Das modifizierte Polystyrol- oder Vinylaromat/Dien-Polymer C1 und C2 wird erhalten durch eine Halogenierungsreaktion an Polystyrol oder an der Polybutadienkomponente eines Vinylaromat/Dien-Polymeren, im folgenden auch S/B-Copolymer genannt. Als Blockpolymere können alle unter zu D2 genannten Typen oder Polystyrol D1 eingesetzt werden. Möglich ist auch die Verwendung von statistischen Vinylaromat/Dien-Copolymeren.

Unter Halogenierungsreaktionen sind die an olefinisch ungesättigten oder an allylischen H-Atomen durchführbaren Reaktionen zu verstehen, die zur Einführung von Halogen und gegebenenfalls zusätzlich OH bzw. = O führen. Im Falle von Polystyrol kann die Halogenierung durch Substitution in der Kette oder im Phenylrest erfolgen. Diese Verfahren sind bekannt. Als einige Beispiele hierfür seien genannt: die Halogenierung mit elementarem Halogen, bevorzugt mit Chlor, die Alkoxichlorierung durch kombinierte Einwirkung von Chlor in Gegenwart von Alkoholen, die Hydroxihalogenierung mit Alkalihypohalo genit, ferner die Umsetzung mit organischen Hypochloriten, z.B. tert.-Butylhypochlorit, welche zur Ausbildung von Chlorhydrinen führt. Eine weitere Methode ist die Anwendung von N-Halogenverbindungen. Beispiele hierfür sind N,N-Dichlordimethylhydantoin, Trichlorisocyanursäure, Dichlorglykoluril, Chloramin T, Na-Dichlorisocyanurat, N-Bromsuccinimid. Brauchbar ist auch die Methode der Dichlorcarbenreaktion mit den Doppelbindungen der Butadieneinheiten. Die erhaltenen Produkte lassen sich durch ihren Halogengehalt charakterisieren.

Die untere Grenze des Halogengehalts liegt vorzugsweise bei etwa 1 Gew.-% bezogen auf das Polymer. Die obere Grenze ist festgelegt durch den Diengehalt des S/B-Polymeren. Sie ist erreicht bei vollständiger Sättigung der Doppelbindungen. Der tatsächlich erreichte Halogengehalt hängt ab von der Art der Halogenierung (z.B. Chlorierung, Hydroxichlorierung, Dichlorcarbenylierung). In besonderen Fällen können auch zusätzlich Allyl-H-Atome durch Halogen substituiert, oder nach Abspaltung von HCl neu entstandene Doppelbindungen abermals chloriert sein. Die Produkte können auch aufgrund von oxidativen

Prozessen zusätzlich geringere Anteile an Carbonylgruppen enthalten. Polystyrol wird vorzugsweise bis zu einem Halogengehalt von max. 50 Gew.-% bezogen auf das halogenierte Polystyrol, insbesondere bis zu 30 Gew.-% halogeniert.

Eine weitere Methode ist die Pfropfung mit Monomeren. Zur Pfropfreaktion mit den Dien/Vinylaromatpolymeren geeignete Monomere besitzen vorzugsweise polaren Charakter. Ihre Auswahl hängt ab von der Art des zu verklebenden Substrats. Zur Verklebung von SBS-Sohlenmaterial haben sich beispielsweise Acrylat-gepfropfte Dien-Vinylaromatpolymere als geeignet erwiesen. Pfropfkomponenten sind z.B. $C_1$-$C_8$-Ester der Acrylsäure und der Methacrylsäure, Hydroxy- und Alkoxialkylester der genannten Säuren, ferner Ester der Itaconsäure und der Citraconsäure. Auch Nitrile der Acrylsäuren z.B. Acrylnitril und Methacrylnitril sind verwendbar, desgleichen die entsprechenden freien Carbonsäuren der oben beschriebenen Ester ferner Maleinsäure(-derivate). Beispiele für zur Pfropfung verwendbare Vinylmonomere sind Vinylhalogenide, z.B. Vinylchlorid, Vinylester wie Vinylacetat, Vinylbutyrat, Vinylalkylether wie z.B. Vinylmethylether, Vinylbutylether. Ferner sind geeignet Vinylalkylketone mit $C_1$-$C_8$-Alkylresten.

Zur Anpassung an spezielle Klebprobleme ist auch die Pfropfung von Gemischen aus Monomeren der gleichen Klasse aber auch aus verschiedenen Klassen erforderlich. Bei Anwendung von mehr als einem Monomeren ist die Verwendung von weniger polaren Monomeren z.B. Styrol, Isopren, Butadien als weiteres Monomer möglich. Die Pfropfung von mehreren Monomeren kann gemeinsam oder aber zur Erzielung besonderer Eigenschaften nacheinander erfolgen.

Die bei der Pfropfung erhaltenen Produkte stellen natürlich keine einheitlichen Propfpolymeren dar, sondern es handelt sich stets um Gemische der Pfropfpolymeren mit gleichzeitig entstandenem Homopolymer bzw. bei Anwendung von mehreren Pfropfmonomeren um die entsprechenden Copolymeren. Wenn nachstehend von "Pfropfpolymeren" die Rede ist, so ist darunter das unter den üblichen Pfropfbedingungen entstandene Gemisch zu verstehen, dessen Zusammensetzung von der Wahl der Pfropfbedingungen abhängig ist, die im Extremfall natürlich auch reine Pfropfpolymere liefern können.

Die Pfropfreaktion wird vorzugsweise in Lösung ausgeführt. Als Lösungsmittel sind beispielsweise geeignet aromatische Kohlenwasserstoffe, wie Benzol oder Toluol ferner Carbonsäureester, Ketone, Alkohole oder Gemische daraus. Bevorzugt ist Toluol, besonders bevorzugt eine Mischung aus Toluol und Ethylacetat. Gegebenenfalls kann auch das Monomer als Lösungsmittel dienen. Die Pfropfung kann aber auch als Emulsions- oder Fällungspolymerisation erfolgen.

Die Pfropftemperatur richtet sich nach der Wahl des Initiators und ist von dessen Zerfallsgeschwindigkeit abhängig. Bevorzugt ist eine Temperatur in der Nähe des Siedepunktes des Lösungsmittels bzw. des Gemisches.

Als Initiatoren sind übliche für Pfropfreaktionen in Lösungsmitteln gebräuchliche Substanzen vom Typ der Peroxid- und Azoverbindungen brauchbar.

Die Isolierung der Propfpolymeren kann nach bekannten Methoden erfolgen, z.B. durch Fällen mit Nichtlösern oder durch Strippen. Möglich ist auch die direkte Verwendung der Pfropflösungen.

Bevorzugtes Polystyrol D1 ist gekennzeichnet durch ein Molekulargewicht von 10.000 - 1.000.000.

Bevorzugte Vinylaromatdiencopolymere D2 enthalten mindestens einen Block aus polymerisierten vinylaromatischen Verbindungen, wie Styrol, Vinyltoluol, $\alpha$-Methylstyrol, Vinylnaphthalin und in besonderen Fällen auch zusätzlich kleine Menge von Divinylverbindungen wie Divinylbenzol. Bevorzugt sind Styrol und $\alpha$-Methylstyrol, besonders bevorzugt ist Styrol. Das Polymerisat dieser Monomeren bilden den sogenannten harten Block (auch als "S" für Styrol bezeichnet).

Der Dienblock enthält als polymerisierte Diene bevorzugt 1.3-Diene mit 4 bis 6 C-Atomen. Beispiele hierfür sind 1.3-Butadien, Isopren, 2.3-Dimethyl-1.3-butadien. Bevorzugt sind Butadien und Isopren, besonders bevorzugt ist Butadien. Der Dienblock wird deshalb auch mit "B" (für Butadien) bezeichnet. Es handelt sich hier um den sogenannten Weichblock.

Die Blockpolymeren D2 können in bekannter Weise durch anionische Polymerisation in flüssigen Kohlenwasserstoffen als Lösungsmittel hergestellt werden. Die Struktur der hierbei erhältlichen Blockpolymeren kann sehr vielfältig sein. Im einfachsten Fall handelt es sich um Blockpolymere vom Typ S-B. Eine Abwandlung hiervon sind die Blockpolymeren mit Übergangsblöcken (tapered structures) symbolisiert durch S-SB-B, worin SB einen sich in der Zusammensetzung von "styrolreich" bis "butadienreich" kontinuierlich ändernden Block darstellt. Sie entstehen bei der gleichzeitigen Polymerisation beider Monomeren. Durch Kopplung von lebenden Blockpolymeren können Strukturen der Form S-B-S oder mit mehrfunktionellen Kopplern $(SB)_nK$ entstehen, worin K das Kopplermolekül und n dessen Kopplungswertigkeit symbolisieren. Möglich ist auch die Herstellung von Blockpolymeren durch abwechselnde Zugabe von Monomeren, wobei Blockpolymere vom Typ $(SB)_n$-S gebildet werden. Möglich ist ferner auch die Herstellung von Polymeren mit endständigen Dienblöcken. Ferner kann man durch abwechselnde Kombination der getrennten und der gemeinsamen Zugabe der Monomeren und von Kopplern weitere Strukturvarianten herstellen. Dem Fachmann ist weiter bekannt, daß durch Wahl der Reaktionstemperatur und des Lösungsmittels die Struktur der Blockpolymeren (Vinylgehalt der Dienkomponente, statistische Verteilung der Monomeren) beeinflußt werden kann.

Ferner können durch Zugabe geringer Mengen Divinylbenzol zusätzlich Verzweigungen eingebaut werden. Eine weitere Variable ist das Mengenverhältnis der Monomeren und die gemeinsame Verwendung verschiedener Dien- und Vinylaromatkomponenten.

Möglich ist auch die Verwendung von Monomergemischen zum Aufbau der harten und der weichen Blöcke, beispielswiese Styrol und α-Methylstyrol oder Butadien und Isopren, wobei die Polymeren dieser Monomeren getrennte Blöcke darstellen können.

In speziellen Fällen sind auch partiell oder vollständig hydrierte Blockpolymere einsetzbar. Weitere Typen, sind styrolgepfropfte SB-Blockcopolymere oder statistische Styrol/Butadiencopolymere.

Das Mengenverhältnis von Dien/Vinylaromat kann in den Polymeren variieren. Bevorzugt sind Polymere mit einem Styrolgehalt über 20 %, besonders bevorzugt solche mit über 40 %. In Sonderfällen können auch Polymere mit einem nur sehr geringen Dienanteil von etwa 1 % verwendet werden. Insbesondere sind diese Polymeren zur Herstellung der Komponente C verwendbar wobei in diesem Fall auch Polystyrol als Endglied dieser Reihe eingesetzt werden kann.

Bevorzugt sind Mengen an Polystyrol D1 oder Vinylaromat-Dienpolymer D2 von 0 - 50, besonders bevorzugt von 2 -20 Teilen.

Bevorzugte Polyisocyanate E sind aliphatische oder aromatische Polyisocyanate, bevorzugt Triisocyanate, besonders bevorzugt sind z.B. Triphenylmethantriisocyanat oder insbesondere Thionophosphorsäure-tris-(p-isocyanatophenylester). Bevorzugt sind Mengen zwischen 0, und 10 Teilen.

Die erfindungsgemäßen Produkte stellen wertvolle Klebstoffe bzw. Klebstoffrohstoffe zum Verkleben beliebiger Substrate, insbesondere aber zur Verklebung von Weich-PVC mit sich selbst, mit thermoplastischem Kautschuk oder anderen Materialien, dar.

In einer ganz besonders bevorzugten Ausführungsform werden gleichzeitig ein Phenol B1 und ein Säureamid B2 verwendet, insbesondere Bisphenol A und N,N-Diethyltoluolsulfonamide, Bisphenol A und N-Methyl-benzolsulfonamid, Nonylphenol und N,N-Dialkyl-toluolsulfonamid.

Den Mischungen der Komponenten A-D können als Komponente (E) gegebenenfalls Polyisocyanate kurz vor dem Gebrauch zugemischt werden, um die Wärmefestigkeit der Verklebungen zu verbessern. Typische Beispiele hierfür sind Diisocyanate und Triisocyanate. Bevorzugt sind Triisocyanate z.B. Triphenylmethantriisocyanat oder Thionophosphorsäure-tris-(p-isocyanatophenylester).

Die Mischungen aus den Komponenten A, B, C und D und gegebenenfalls E können sowohl unverdünnt als auch unter Verwendung eines Lösungs- bzw. Quellungsmittels angewendet werden. Im weiteren Falle ist eine Anwendung aus der Schmelze, im anderen, bevorzugten Falle die Anwendung durch Auftragen der Lösung und Verdunsten des Lösungsmittels möglich. Als Lösungsmittel kommen niedrigsiedende Flüssigkeiten in Frage. Bevorzugt eignen sich aromatische und cycloaliphatische Kohlenwasserstoffe und Alkohole. Besonders bevorzugt sind Ketone wie Butanon, Aceton, Ester wie Ethylacetat, Methylenchlorid und Toluol. Häufig sind besonders günstig Gemische der obengenannten Lösungsmittel. Im allgemeinen liegen die Mischungen der Komponenten A-D mit einem Lösungsmittel als stabile Zweiphasengemische vor.

Ferner können die Mischungen auch Füllstoffe, Öle, Farbstoffe und weitere Polymere enthalten. Zur Erreichung spezieller Eigenschaften können den Mischungen natürliche oder synthetische Harze wie Phenolharze, Ketonharze, Kolophoniumderivate, Phthalatharze, Acetyl- oder Nitrocellulose zugefügt werden.

Zur Verarbeitung werden Lösungen der vorliegenden Polyesterpolyurethane auf die gegebenenfalls gerauhten oder in anderer Weise vorbehandelten, zu verklebenden Werkstoffoberflächen gebracht. Dies kann mittels Walze, Pinsel, Spachtel, Spritzpistole oder einer anderen Vorrichtung geschehen.

Mit den erfindungsgemäßen Produkten können zahlreiche Werkstoffe, wie Papier, Pappe, Holz, Metall und Leder mit hoher Festigkeit verklebt werden. Bevorzugt eignen sie sich zum Kleben von beliebigen Kunststoffen mit sich selbst oder mit anderen Materialien, insbesondere zum Kleben von weichmacherhaltigen Homo- oder Mischpolymerisaten des Vinylchlorids und thermoplastischer SBS-Kautschuke, vor allem zum Kleben von Sohlen aus diesen Materialien auf Schuhschäfte aus Leder oder Syntheseleder. Auch als Haftvermittler beim Anspritzen von Sohlenmaterialien an den Schaft, z.B. PVC, können die Produkte eingesetzt werden.

Die erfindungsgemäßen Produkte eignen sich im übrigen auch hervorragend als Beschichtungsmittel für die verschiedensten Substrate und Kompoundierungsmittel für andere Polymere.

Die nachstehenden Beispiele dienen der weiteren Erläuterung der Erfindung.

<u>Beschreibung der Klebstoffkomponenten</u>

Nachstehend sind die Komponenten der Mischungen charakterisiert.

PU1:

Polyesterpolymethan aus 1 Mol Poly-1,6-hexandioladipat vom Molekulargewicht 3000, 0,8 Mol eines Gemisches aus Butandiol-1,4 und Hexandiol-1,6 und 1,799 Mol Diphenylmethandiisocyanat (MDI) mit einer Lösungsviskosität (15 %ig in Methylethylketon) von 1-2 Pas.

PU2:

Polyesterpolyurethan aus 1 Mol Poly-1,6-hexandioladipat vom Molekulargewicht 2250, 0,9 Molen eines Gemisches aus Butandiol-1,4 und Hexandiol-1,6 und 1,899 Molen Diphenylmethandiisocyanat (MDI) mit einer Lösungsviskosität (15 %ig in Methylethylketon) von 1-2 Pas.

SB1:

Ein SB-Blockpolymer mit 20 % Butadien und 80 % Styrol, $T_g$-80° C, MFI (10 kg/200°) = 87, Vicat B = 56° (Styrolux der BASF) wurde als 10 %ige Lösung in Ethylacetat bei 0° auf einen Chlorgehalt von 10 % chloriert.

SB2:

Das unter SB1 verwendete Blockpolymer wurde mit Methylmethacrylat in Toluol als Lösungsmittel gepfropft, MMA-Gehalt 80%; L-Wert 60 [dl/g].

SB3:

Ein SB-Blockpolymer mit 20 % Butadien und 80 % Styrol, $T_g$-80° C, MFI (10 kg/200° C) = 87, Vicat B = 56° (Styrolux der BASF) wurde als 10 %ige Lösung in Toluol bei 0° auf einen Chlorgehalt von 2,5 % chloriert.

Polyisocyanat E1:

Thionophosphorsäure-tris-(p-isocyanatophenylester), Lösung in Methylenchlorid, NCO-Gehalt 5,4 ± 0,2 %.

Soweit in folgenden Mengen "Teile" angegeben werden, handelt es sich, falls nichts anderes vermerkt ist, um Gewichtsteile.

Der Begriff "phr" steht für 1 Gewichtsteil bezogen auf 100 Teile Polyurethan A.

Ausführung der Verklebungen

Wenn nicht anders angegeben, wurden die nachstehend beschriebenen Prüfmethoden in den Beispielen 1-11 angewendet.

Unter Verwendung der nachstehend beschriebenen 20 gew.-%igen Klebstofflösungen wurden Verklebungen von Weich-PVC (30 bzw. 45 Gew.-% Dibutylphthalat) mit einem gefüllten Sohlenmaterial auf Basis von Styrol/Butadien-Blockpolymeren oder mit dem gleichen PVC-Substrat ausgeführt. Nach dem Auftragen auf Streifen von 15 x 3 cm ließ man beide Seiten 30 Minuten ablüften und unterzog dann die Probe mit dem thermoplastischen Kautschuk 4 Sekunden einer Schockaktivierung mit Hilfe eines IR-Strahlers (Funck-Aktiviergerät Typ A 1000).

Sofort danach wurden die Prüfkörper aufeinandergelegt und innerhalb von 10 Sekunden in einer Presse bei Raumtemperatur und einem Druck von 0,4 MPa 10 Sekunden lang verpreßt.

1. Schälfestigkeit

Sofort danach (innerhalb von 30 Sekunden) wurde die erste Prüfung auf Schälfestigkeit in einer Zerreißmaschine ausgeführt (Sofortwert, Abzugsgeschwindigkeit 100 mm/Min.). Eine weitere Prüfung erfolgte nach 1 Tag, eine weitere nach 9 Tagen. Eine Variante bestand darin, daß unmittelbar vor dem Klebstoffauftrag der Lösung 5 phr Polyisocyanat E1 zugefügt wurden. Die Ergebnisse sind jeweils gekennzeichnet durch "ohne" bzw. "mit" Isocyanat.

2. Bestimmung der Kontaktklebzeit nach der Wärmeschockaktivierung (KKZ 70)

Als Material wurde ein handelsübliches, 4 mm dickes Gummimaterial aus Acrylnitril-Butadien-Kautschuk (Acrylnitrilgehalt 33 %, Defo-Härte 700 nach DIN 53 514) mit einem Gehalt an Silikat-Füllstoff von etwa 31 % (Shore-Härte A des Gummimaterials 85 nach DIN 53 505) verwendet.

Zur Prüfung wurden Streifen von 4 cm Länge und 2 cm Breite eingesetzt. Die einem Sohlenmaterial entsprechenden Streifen werden nach dem Klebstoffauftrag einen Tag bei Raumtemperatur offen gelagert und dann 3 Sekunden im Funck-Aktiviergerät Typ A 1000 (70 °C) aktiviert.

Die dem Obermaterial entsprechenden, mit Klebstoff versehenen Streifen werden nicht aktiviert, sondern lediglich 30 Min. bei Raumtemperatur offen gelagert und dann mit einem Streifen, der einen aktivierten Klebfilm trägt, sofort nach dessen Aktivierung kreuzförmig übereinandergelegt und 5 Sekunden mit einem Gewicht von 10 N belastet. Nach dem Pressen wird durch Auseinanderziehen der Streifen von Hand die Haftung der Klebfilme beurteilt. Die Prüfung wird in Abständen von je 30 Sekunden nach Aktivierung wiederholt (bis zu 10 Minuten). Die Bestimmung der KKZ 70 wird abgebrochen, sobald die Klebfilme keinen Kontakt mehr aufweisen.

3. Bestimmung der Mindestaktivierungstemperatur (MAT)

Man verfährt wie unter 2 jedoch mit einer Aktivierungstemperatur von 35 °C. 30 Minuten nach der Aktivierung wird der Streifen sofort mit dem 30 Minuten alten, nicht aktivierten Streifen kreuzförmig übereinandergelegt und 5 Sekunden mit einem Gewicht von 10 N belastet.

Nach dem Pressen wird durch Abziehen der Streifen von Hand die Haftung der Klebfilme beurteilt.

Es wird die Mindestaktiviertemperatur ermittelt, bei der die Klebfilme sofort nach dem Aktivieren einen Kontakt aufweisen.

4. Ermittlung der Wärmefestigkeit (WF)

Zwei Streifen PVC, 6 cm lang und 2,5 cm breit, des gleichen Materials wie bei der Ermittlung der Anfangsfestigkeit, werden nach Rauhung mit Schleifband der Körnung 40 mit Klebstoff versehen, 60 Minuten offen bei Raumtempe ratur gelagert, dann mit einer Überlappung von 25 mm gefügt und 10 Sekunden bei 3,5 kp/cm$^2$ gepreßt. Die Klebfläche beträgt 2,5 x 2,5 cm. Nach 10 Tagen Lagerung bei Raumtemperatur werden die Klebungen in einen auf 40 °C vorgeheizten automatischen Wärmeschrank mit einer Belastung von 11,2 kp eingehängt. Nach 20 Minuten wird die Temperatur jeweils innerhalb von 20 Minuten um 10 °C gesteigert. Es wird die Temperatur ermittelt, bei der die Trennung der Verklebung erfolgt (WF o/m = Werte ohne/mit Isocyanatzusatz).

5. Kontaktklebzeit bei Raumtemperatur (KKZ-RT)

Auf holzfreiem Karton wird der Klebstoff mit 0,3 mm Dicke aufgetragen. In Abständen von 15 Minuten werden dann 5 mm breite Prüfstreifen kreuzförmig übereinandergelegt und 10 Sekunden mit 50 g gepreßt. Die Bestimmung der Kontaktklebezeit ist beendet, wenn die Klebfilme nicht mehr aneinander haften.

Beispiel 1

Dieses Beispiel zeigt die Verbesserungen, die der Zusatz von Bisphenol A auf Abmischungen von

Polyurethanen mit chlorierten Vinylaromat/Dien-Polymeren ermöglicht. Diese Polymerabmischungen sind speziell für die Verklebungen von TR-Sohlenmaterial (SBS-Blockpolymer) entwickelt worden. Man stellte 20 %ige Lösungen der Polymeren in einem Gemisch aus Aceton und Essigester (3:1 Gew.-Verh.) her, wobei das Gewichtsverhältnis von Polyurethan PU1 zu modifiziertem SB-Polymer SB1 9:1 betrug. Diesen Klebstofflösungen wurden die in Tabelle 1 angegebenen Mengen Bisphenol A zugegeben.

| Zusammensetzung der Abmischungen 1A - 1C: | |
|---|---|
| Komponente gemäß Anspruch | Gew.-Teile |
| A = PU1 | 90 |
| B = Bisphenol A | 0-20 |
| C = SB1 | 10 |
| Vergleich: | |
| A = PU1 | 100 |
| B = BPA | 10 |
| C = SB1 | 0 |

Tabelle 1

| Beispiel | Zusatz BPA [1] | KKZ-70° C (Min.) | Schälfestigkeit[2] (N/mm) | | | | | |
|---|---|---|---|---|---|---|---|---|
| | | | ohne | | | mit Isocyanat | | |
| | | | sof. | 1Tag | 9Tage | sof. | 1Tag | 9Tage |
| Vergleich | 10 | <1 | 0,2 | 0,2 | 0,3 | 0,2 | 1,1 | 1,2 |
| | | | 0,3 | 0,6 | 0,6 | 0,2 | 1,0 | 1,0 |
| 1 A | 0 | <1 | 3,5 | 5,8 | 5,8 | 1,7 | 5,7 | 7,4 |
| | | | 3,5 | 8,0 | 9,6 | 2,4 | 7,5 | 7,2 |
| 1 B | 10 | >10 | 2,0 | 5,2 | 6,6 | 1,3 | 6,7 | 7,8 |
| | | | 1,3 | 9,0 | 9,9 | 2,8 | 7,8 | 8,4 |
| 1 C | 20 | >10 | 2,5 | 4,9 | 5,9 | 1,0 | 7,6 | 9,8 |
| | | | 1,1 | 4,0 | 7,8 | 1,0 | 6,7 | 8,0 |

[1] Teile je 100 Teile Polymer
[2] Obere Reihe 4 Sekunden, untere Reihe 6 Sekunden aktiviert

Verklebt wurde PVC gegen Styrol/Butadien-Block-Sohlenmaterial. Die obere Reihe der Schälfestigkeitswerte wurde bei einer Wärmeaktivierzeit von 4 Sekunden, die darunter stehende von 6 Sekunden ermittelt. Die Kontaktklebzeit nach Wärmeaktivierung KKZ 70° ist deutlich verbessert, desgleichen erhöhten sich die Schälfestigkeiten mit Zusatz von Isocyanat.

Beispiel 2

Analog Beispiel 1 wurden Mischungen hergestellt, in denen das Gewichtsverhältnis PU 1 zu SB1 8:2 betrug. Prüfergebnisse vgl. Tabelle 2. Auch hier zeigt sich ein verbesserter Einfluß von BPA. Sowohl die Schälfestigkeiten (ohne und mit Isocyanat) als auch die KKZ-Werte sind verbessert.

Die Mischungen waren wie folgt zusammengesetzt:

| Komponente | Gew.-Teile |
|---|---|
| A = PU1 | 80 |
| B = BPA | 0-20 |
| C = SB1 | 20 |

Tabelle 2

| Beispiel | Zusatz BPA [1] | KKZ-70° C (Min.) | Schälfestigkeit[2] (N/mm) | | | | | |
|---|---|---|---|---|---|---|---|---|
| | | | ohne | | | mit Isocyanat | | |
| | | | sof. | 1Tag | 9Tage | sof. | 1Tag | 9Tage |
| 2 A | 0 | <1 | 3,0 | 5,8 | 6,6 | 3,1 | 6,8 | 6,5 |
| | | | 4,2 | 9,0 | 9,0 | 3,8 | 6,7 | 6,5 |
| 2 B | 10 | 5 | 3,0 | 6,0 | 7,9 | 2,0 | 8,0 | 9,0 |
| | | | 2,5 | 8,0 | 9,5 | 1,2 | 7,1 | 7,0 |
| 2 C | 20 | 10 | 2,7 | 5,2 | 8,3 | 2,7 | 7,1 | 8,1 |
| | | | 1,2 | 5,0 | 8,6 | 1,7 | 7,0 | 8,0 |

1) Teile je 100 Teile Polymergemisch

2) vgl. 2) Tabelle 1

Beispiel 3

Man stellte aus PU2 und SB2, einem mit Methylmethacrylat gepfropftem SBS-Blockpolymer, 20 %ige Lösungen in Aceton/Ethylacetat (Gew.-Verh. 7:3) her und fügte die in Tabelle 3a angegebenen Mengen Bisphenol A zu. Die Verklebung erfolgte wie bei Beispiel 1 an Styrol/Butadien-Blockpolymer-Sohlenmaterial, welches gegen PVC (mit 45 Teilen Weichmacher) verklebt wurde. Die Ergebnisse von Tabelle 3b zeigen sowohl ohne Isocyanat als auch mit Isocyanatzusatz eine Verbesserung der Endwerte der Schälfestigkeit.

Tabelle 3a

| | Gew.-Teile | | |
|---|---|---|---|
| | PU2 | SB2 | BPA |
| Vergleich | 70 | 30 | - |
| 3A | 70 | 30 | 20 |
| 3B | 70 | 30 | 30 |

Tabelle 3b

| Beispiel | Zusatz [2] Art | Menge | | Schälfestigkeit[1] (N/mm) | | | | | |
|---|---|---|---|---|---|---|---|---|---|
| | | | | ohne Isocyanat | | | mit Isocyanat | | |
| | | | | sof. | 1Tag | 9Tage | sof. | 1Tag | 9Tage |
| Vergleich | - | 0 | a) | 2,5 | 3,0 | 4,6 | 2,8 | 5,4 | 6,2 |
| | | | b) | 2,0 | 4,2 | 4,2 | 2,6 | 6,0 | 7,0 |
| 3 A | BPA | 20 | | 1,7 | 4,0 | 5,8 | 2,7 | 6,4 | 7,8 |
| | | | | 1,7 | 3,8 | 6,2 | 1,5 | 5,5 | 7,6 |
| 3 B | BPA | 30 | | 1,3 | 3,1 | 5,8 | 1,7 | 5,8 | 7,5 |
| | | | | 0,7 | 5,0 | 6,8 | 0,9 | 5,0 | 8,3 |

[1] a) und b) jeweils Werte nach 4 und 6 Sekunden Aktivierung
[2] Teile je 100 Teile Polymergemisch

Beispiel 4

Die Wirksamkeit anderer Phenole zeigt die Tabelle 4. Anstelle von Bisphenol A wurde ein durch Umesterung von BPA mit Diphenylcarbonat im Gewichtsverhältnis 2:1 erhaltenes Bisphenolcarbonat (BPC) eingesetzt. Der Klebstoff wurde analog Beispiel 3 hergestellt und geprüft, wobei anstelle von PU2 das Polyurethan PU1 verwendet wurde. Das Optimum der Schälfestigkeit liegt bei etwa 10 Teilen BPC, wobei aber mit höheren Dosierungen immer noch die Anforderungen der DIN-Norm (9 Tage Wert 5 N/mm) erfüllt werden.

| | PU1 | SB2 | BPC |
|---|---|---|---|
| Vergleich | 70 | 30 | - |
| 4A | 70 | 30 | 10 |
| 4B | 70 | 30 | 20 |
| 4C | 70 | 30 | 30 |

Tabelle 4

| Beispiel | Zusatz[1] | Schälfestigkeit (N/mm) | | | | | |
|---|---|---|---|---|---|---|---|
| | | ohne Isocyanat | | | mit Isocyanat | | |
| | | sof. | 1Tag | 9Tage | sof. | 1Tag | 9Tage |
| Vergleich | 0 | 3,6 | 5,6 | 5,0 | 3,5 | 4,7 | 5,9 |
| 4 A | 10 | 2,9 | 5,3 | 6,0 | 3,1 | 5,8 | 6,3 |
| 4 B | 20 | 2,0 | 6,2 | 5,7 | 1,7 | 4,8 | 5,6 |
| 4 C | 30 | 1,9 | 4,8 | 4,8 | 1,8 | 5,0 | 5,2 |

[1] Teile BPC je 100 Teile Polymer

Beispiel 5

Aus einer Mischung von 80 Teilen PU1 und 20 Teilen SB1 wurde eine 20 %ige Lösung in Aceton/Essigsäureethylester (3:1) hergestellt. Zu dieser Lösung fügte man 5 bzw. 10 Teile (bezogen auf Feststoff) eines Phenols, das durch Umsetzung von Bisphenol A mit Phosphorsäuretrichlorid (Verhältnis 3:1)

erhalten worden war (BPP).

Tabelle 5

| Beispiel | Zusatz[1] BPP | KKZ 70°C | WF o/m | Schälfestigkeit[1] (N/mm) | | | | | |
|---|---|---|---|---|---|---|---|---|---|
| | | | | ohne Isocyanat | | | mit Isocyanat | | |
| | | | | sof. | 1Tag | 9Tage | sof. | 1Tag | 9Tage |
| Vergleich | - | <1 | 53/100° | 2,0 | 5,8 | 6,6 | 3,1 | 6,8 | 6,5 |
| 7 A | 5 | 2 | 54/95° | 2,5 | 7,2 | 9,4 | 2,3 | 6,9 | 8,0 |
| 7 B | 10 | 3 | 54/94° | 2,5 | 5,6 | 6,7 | 2,6 | 7,8 | 8,3 |

[1] Verklebungen wie Beispiel 1

Beispiel 6

Aus einer Mischung von 90 Teilen PU1 und 10 Teilen SB1 wurde eine 20 %ige Lösung in Aceton/Essigsäureethylester (3:1) hergestellt. Zu dieser Lösung fügte man 15 Teile Nonylphenol. Die Schälprüfung erfolgte an Verklebungen von PVC gegen PVC.

Tabelle 6

| KKZ 70° Min. | WF o/m °C | Schälfestigkeit (N/mm) | | | | | |
|---|---|---|---|---|---|---|---|
| | | ohne Isocyanat | | | mit Isocyanat | | |
| | | sof. | 1Tag | 9Tage | sof. | 1Tag | 9Tage |
| a)6 | 55/94 | 2,3 | 6,1 | 6,6 | 1,7 | 6,0 | 6,3 |
| b)" | " | 2,4 | 5,5 | 5,8 | 2,5 | 4,5 | 5,1 |

a: PVC mit 30 % Dibutylphthalat
b: " " 45 % "

Beispiel 7

Analog Beispiel 6 wurde eine Klebstoffmischung hergestellt mit dem Unterschied, daß anstelle von 15 Teilen Nonylphenol 10 Teile BPA und 10 Teile N,N-Diethyl-p-toluolsulfonsäureamid zugefügt wurden. Diese Mischung zeigte eine verbesserte Kontaktklebrigkeit bei Raumtemperatur (KKZ-RT).

Tabelle 7

| KKZ-70 (Min) | KKZ-RT (Min) | WF o/m | Schälfestigkeit[1] (N/mm) | | | | | |
|---|---|---|---|---|---|---|---|---|
| | | | ohne Isocyanat | | | mit Isocyanat | | |
| | | | sof. | 1Tag | 9Tage | sof. | 1Tag | 9Tage |
| 2 | 15 | 51/88 | 3,1 | 8,3 | 8,3 | 2,6 | 7,5 | 8,0 |

[1] Prüfung PVC gegen SBS-Sohlenmaterial, Wärmeaktivierung 4 Sekunden

Beispiel 8

Aus einer Mischung von 80 Teilen PU1 und 20 Teilen SB3 wurde eine 20 %ige Lösung in Aceton/Essigsäureethylester (3:1) hergestellt (Beispiel 8A). Zu dieser Lösung gab man 20 Teile BPA und 10 Teile N,N-Diethyl-p-toluolsulfonsäureamid (Beispiel 8B). Die Schälfestigkeiten wurden analog Beispiel 1 ermittelt, weitere klebtechnische Werte sind in Tabelle 8 zusammengestellt.

Tabelle 8

| Beispiel | KKZ-70° (Min) | KKZ-RT (Min) | MAT °C | Schälfestigkeit[1] (N/mm) | | | | | |
|---|---|---|---|---|---|---|---|---|---|
| | | | | ohne Isocyanat | | | mit Isocyanat | | |
| | | | | sof. | 1Tag | 9Tage | sof. | 1Tag | 9Tage |
| 8 A | <1 | <15 | 60 | 1,3 | 3,9 | 5,9 | 1,5 | 5,9 | 6,0 |
| 8 B | 3 | 120 | 45 | 2,0 | 4,5 | 8,1 | 1,3 | 7,9 | 7,2 |

[1] Werte nach 4 Sekunden Aktivierzeit

Dieses Beispiel zeigt, daß auch die Kombination von modifiziertem Styrol/Butadien-Polymer mit einem geringen (2,5 %) Chlorgehalt und einem Phenol + Amid eine verbesserte Kontaktklebzeit sowohl bei 70° als auch bei Raumtemperatur liefern. Ferner sind die Schälfestigkeiten von B gegenüber A verbessert.

Beispiel 9

Folgende Mischungen wurden durch Auflösen der nachstehenden Komponenten in Aceton/Essigsäureethylester (3:1) zu einer 20 %igen Lösung hergestellt.

| Beispiel | PU1 | SB1 | SB4 | BPA |
|---|---|---|---|---|
| 9 A | 80 | 10 | 10 | 10 |
| 9 B | 80 | 20 | - | 10 |
| 9 C | 80 | 20 | - | - |

Die klebtechnische Prüfung lieferte nachstehende Ergebnisse.

Tabelle 9

| Beispiel | KKZ-70° (Min) | Schälfestigkeit[1] (N/mm) | | | | | |
|---|---|---|---|---|---|---|---|
| | | ohne Isocyanat | | | mit Isocyanat | | |
| | | sof. | 1Tag | 9Tage | sof. | 1Tag | 9Tage |
| 9 A | >10 | 3,0 | 7,0 | 8,4 | 2,4 | 4,8 | 6,5 |
| 9 B | 5 | 3,0 | 6,0 | 7,9 | 2,0 | 8,0 | 9,0 |
| 9 C | <1 | 2,0 | 8,0 | 8,0 | 1,0 | 5,5 | 7,7 |

[1] Nach 4 Sekunden Aktivierzeit analog Beispiel 1

Die Kontaktklebzeit ist bei Zusatz des SBS-Triblockpolymeren SB4 (Cariflex 1102) deutlich verbessert.

Beispiel 10

Nachstehende Mischungen wurden in Aceton/Ethylacetat (3:1) aufgelöst (20 % Feststoffgehalt) und wie

in Tabelle 10 angegeben geprüft.

Tabelle 10

| Beispiel | PU1 | SB5[1)] | p-Nonylphenol |
|---|---|---|---|
| 11 A | 80 | 20 | - |
| 11 B | 80 | 20 | 15 |
| 11 C | 80 | 20 | 20 |

[1)] Analog SB1 aber auf einen Chlorgehalt von 13,3 % Cl chloriert.

Tabelle 10

| Beispiel | KKZ-70° (Min) | KKZ-RT (Min) | MAT °C | Schälfestigkeit[2)] (N/mm) | | | | | |
|---|---|---|---|---|---|---|---|---|---|
| | | | | ohne Isocyanat | | | mit Isocyanat | | |
| | | | | sof. | 1Tag | 9Tage | sof. | 1Tag | 9Tage |
| 10 A | <1 | <15 | 60 | 1,3 | 3,9 | 5,9 | 1,5 | 5,2 | 6,0 |
| 10 B | 1 | 30 | 45 | 1,4 | 6,0 | 7,6 | 1,3 | 5,0 | 6,3 |
| 10 C | 1 | 60 | 45 | 1,7 | 5,5 | 8,0 | 1,5 | 4,6 | 6,0 |

[2)] Verklebung PVC gegen SBS Sohlenmaterial, 4 Sekunden Aktivierung

## Ansprüche

1. Mischungen aus
A) einem Polyurethan A,
B) einem Phenol B1 und/oder einem Säureamid B2,
C) einem modifizierten Polystyrol C1 und/oder einem modifizierten Vinylaromat/Diencopolymer C2
und gegebenenfalls
D) einem Polystyrol D1 und/oder einem Vinylaromat/Diencopolymer D2
und gegebenenfalls
E) einem Polyisocyanat E.

2. Mischungen gemäß Anspruch 1, dadurch gekennzeichnet, daß enthalten sind
20 bis 99 Gew.-Teile des Polyurethans A,
0,5 bis 40 Gew.-Teile des Phenols B1 und/oder eines Säureamids B2,
0,5 bis 80 Gew.-Teile eines modifizierten Polymeren C
und gegebenenfalls
0 bis 50 Gew.-Teile eines Polystyrols D1 und/oder eines Vinylaromat/Diencopolymeren D2
und gegebenenfalls
0 bis 10 Gew.-Teile eines Polyisocyanats E,
gegebenenfalls gelöst in einem Lösungsmittel, wobei in der Mischung maximal 50 Gew.-Teile weiterer Substanzen enthalten sind.

3. Mischungen gemäß wenigstens einem der vorhergehenden Ansprüche, dadurch gekennzeichnet, daß die Polyurethane A weitgehend lineare, endständige OH-Gruppen aufweisende Polyurethane sind.

4. Mischungen gemäß wenigstens einem der vorhergehenden Ansprüche, dadurch gekennzeichnet, daß das Phenol wenigstens einer der beiden folgenden Formeln (I) oder (II) entspricht

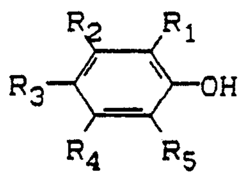

(I)

worin bedeuten:

$R_1$-$R_5$ Wasserstoff, $C_1$-$C_{20}$-Alkyl, $C_5$-$C_8$-Cycloalkyl, substituiertes Cycloalkyl, Alkylarylen, wobei im Alkyl- oder Alkylarylensubstituenten die Alkylgruppen durch -COO-oder -O-Gruppen unterbrochen sein können,

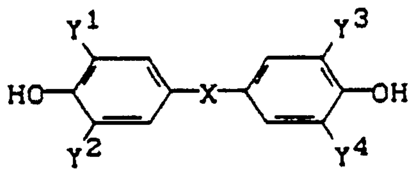

(II)

worin

X eine Einfachbindung oder ein Brückenglied bedeutet,

$Y^1$-$Y^4$ gleich oder verschieden sind und Wasserstoff, $C_1$-$C_4$-Alkyl, vorzugsweise Methyl, oder Halogen, vorzugsweise Chlor oder Brom bedeuten.

5. Mischungen gemäß wenigstens einem der vorhergehenden Ansprüche, dadurch gekennzeichnet, daß das Phenol B1 wenigstens zwei phenolische OH-Gruppen aufweist und eine phenolische OH-Gruppe verestert ist.

6. Mischungen gemäß wenigstens einem der vorhergehenden Ansprüche, dadurch gekennzeichnet, daß das Amid B2 wenigstens 3 C-Atome im Säurerest enthält.

7. Mischungen gemäß wenigstens einem der vorhergehenden Ansprüche, dadurch gekennzeichnet, daß ein Phenol B1 und ein Säureamid B2 vorhanden sind.

8. Mischungen gemäß wenigstens einem der vorhergehenden Ansprüche, dadurch gekennzeichnet, daß wenigstens 2 Gew.-Teile eines Polystyrols D1 und/oder eines Vinylaromat/Diencopolymeren D2 und wenigstens 0,2 Gew.-Teile eines Polyisocyanates E enthalten sind.

9. Verfahren zum Verkleben von Substraten, dadurch gekennzeichnet, daß eine Mischung gemäß wenigstens einem der vorhergehenden Ansprüche verwendet wird.